# EUROPÄISCHE PATENTSCHRIFT

(11) **EP 3 523 554 B1**
(45) Veröffentlichungstag und Bekanntmachung des Hinweises auf die Patenterteilung: **31.08.2022**
(21) Anmeldenummer: 18796386.3
(22) Anmeldetag: 23.10.2018
(51) Int. Cl.: F16F 9/46

(54) **KONTAKTIERUNGSEINRICHTUNG FÜR EIN INNERHALB EINES SCHWINGUNGSDÄMPFERS ANGEORDNETES ELEKTRISCH ANSTEUERBARES VENTIL**
CONTACTING DEVICE FOR AN ELECTRICALLY ACTUATABLE VALVE WHICH IS ARRANGED WITHIN A VIBRATION DAMPER
DISPOSITIF DE MISE EN CONTACT POUR UNE SOUPAPE POUVANT ÊTRE PILOTÉE ÉLECTRIQUEMENT DISPOSÉE À L'INTÉRIEUR D'UN AMORTISSEUR DE VIBRATIONS

(30) Priorität: 01.12.2017 DE 102017221647
(43) Veröffentlichungstag der Anmeldung: 14.08.2019
(73) Patentinhaber: VOLKSWAGEN AKTIENGESELLSCHAFT, 38440 Wolfsburg (DE)
(72) Erfinder: SCHLEGEL, Jan-Rickmer, 38179 Groß Schwülper (DE); KLÖKER, Georg, 38170 Kneitlingen (DE); WAHL, Stephan, 38154 Königslutter (DE); SELLSCHOPP, Jürgen, 38120 Braunschweig (DE)
(86) Internationale Anmeldenummer: PCT/EP2018/079056
(87) Internationale Veröffentlichungsnummer: WO 2019/105655

(56) Entgegenhaltungen:
- WO-A1-2017/133862
- DE-A1- 3 622 634
- DE-A1- 4 238 734

## Beschreibung

Die Erfindung bezieht sich auf das Gebiet der Kraftfahrzeugtechnik und hier insbesondere auf semi-aktive hydraulische Schwingungsdämpfer, bei welchen ein elektrisch ansteuerbares Ventil innerhalb des Schwingungsdämpfers am Kolben oder der Kolbenstange angeordnet ist. Insbesondere bezieht sich die Erfindung auf eine Kontaktierungseinrichtung für ein solches elektrisch ansteuerbares Ventil.

Hydraulische Schwingungsdämpfer werden beispielsweise in Radaufhängungen von Kraftfahrzeugen eingesetzt, um Achskomponenten gegenüber dem Fahrzeugaufbau abzustützen und deren Bewegung zu dämpfen. Über Schalt- und Steuersysteme unter Einbeziehung eines elektrisch ansteuerbaren Ventils im Behälterrohr des Schwingungsdämpfers lässt sich das Dämpfungsverhalten eines solchen Schwingungsdämpfers in der Zug- und Druckstufe beeinflussen, indem mittels des Ventils das Strömungsverhalten eines im Behälterrohr befindlichen Dämpfermediums verändert wird. Entsprechende Schwingungsdämpfer sind beispielsweise aus DE 10 2012 016 437 A1, DE 10 2015 201 957 A1 und DE 10 2016 201 615 A1 bekannt. In diesen Fällen wird das elektrisch ansteuerbare Ventil durch einen elektrischen Leiter kontaktiert, welcher innerhalb der Kolbenstange verläuft.

DE 10 2012 016 437 A1 schlägt zwei separate Adern vor, welche innerhalb der Kolbenstange verlaufen und jeweils am Ende der Kolbenstange über einen Steckverbinder mit am Fahrzeug vorinstallierten Leitungsabschnitten verbunden werden.

DE 10 2015 201 957 A1 schlägt vor, lediglich eine Ader durch die Kolbenstange hindurchzuführen und einen entsprechenden Stromkreis über die Kolbenstange und/oder eine weitere Strukturkomponente des hydraulischen Schwingungsdämpfers zu schließen.

DE 10 2016 201 615 A1 offenbart eine elektrische Leitereinrichtung, bei der zwei Adern von einer gemeinsamen Hülle ummantelt sind. Die elektrische Leitereinrichtung ist aus der Kolbenstange herausgeführt und kann so außerhalb der Kolbenstange an einen Kabelbaum angeschlossen werden.

Beim Verbau von Schwingungsdämpfern mit innenliegendem elektrisch ansteuerbaren Ventil werden bisweilen unterschiedliche Arten der Kabelbaumkontaktierung vorgesehen. So können einerseits Kabelbaumkontaktierungen benötigt werden, bei denen ein oder mehrere Kabel aus der Kolbenstange des Dämpfers herausgeführt werden müssen, wie dies beispielsweise in DE 10 2016 201 615 A1 dargestellt ist. Zum anderen bestehen Kabelbaumkontaktierungen, bei denen aus Bauraumgründen eine solche Möglichkeit entfällt. Hier wird dann eine Steckverbindung in der Kolbenstange für den Kabelbaum vorgesehen. Bei einer Steckverbindung ist es erforderlich, Maßnahmen zu treffen, damit das dämpferseitige Bauteil einer solchen Steckverbindung in der Kolbenstange nicht verrutscht. Dazu ist es üblich, an der Kolbenstange eine Nut oder einen Absatz vorzusehen, mit welcher das dämpferseitige Bauteil der Steckverbindung verrastet wird.

Die DE 36 22 634 A1 offenbart einen Schwingungsdämpfer mit einer Kontaktierungseinrichtung, bei der die elektrischen Kabel, die Steckkontakte sowie der Steckeranschluß in einem Kunststoffteil eingegossen sind, welches innerhalb der Kolbenstange angeordnet ist.

Vor diesem Hintergrund zielt die Erfindung darauf ab, Lösungen zur elektrischen Kontaktierung eines innenliegenden elektrisch ansteuerbaren Ventils aufzuzeigen, welche ohne großen Aufwand flexibel an die unterschiedlichen Arten von Kabelbaumkontaktierung anpassbar sind.

Diese Aufgabe wird durch eine Kontaktierungseinrichtung für ein innerhalb eines Schwingungsdämpfers angeordnetes elektrisch ansteuerbares Ventil mit den Merkmalen von Patentanspruch 1 gelöst. Die erfindungsgemäße Kontaktierungseinrichtung umfasst eine elektrische Spule zur Anordnung an dem elektrisch ansteuerbaren Ventil, ein oder mehrere elektrische Kabel zur Anordnung innerhalb einer Kolbenstange des Schwingungsdämpfers, welche an die Pole der elektrischen Spule angeschlossen sind, und ein hülsenförmig ausgebildetes Gehäuse zur Anordnung in der Kolbenstange, das einen Steckerabschnitt zur mechanischen und elektrischen Kopplung mit einem Kabelbaum, einen Kopplungsabschnitt zur Befestigung an der Spule und einen diese beiden Abschnitte verbindenden Hülsenabschnitt zur Hindurchführung des mindestens einen Kabels ausbildet.

Hierdurch wird eine Baueinheit gebildet, die vor ihrer Montage am Schwingungsdämpfer zusammengesetzt werden kann. Wird eine Kabelbaumanbindung mit innerhalb der Kolbenstange liegender Kontaktierung benötigt, wird das Gehäuse auf das mindestens eine Kabel aufgeschoben und an der Spule befestigt. Soll die Kontaktierungseinrichtung bei einem Schwingungsdämpfer zum Einsatz kommen, bei dem die Kontaktierung außerhalb der Kolbenstange erfolgen muss, wird das Gehäuse einfach weggelassen. Dies ermöglicht die Verwendung von Gleichteilen bei gleichzeitiger Gewährleistung einer einfachen Anpassung an die unterschiedlichen Arten der Kabelbaumkontaktierung.

Durch die Befestigung des bzw. der Kabel an der Spule vor dem Verbau am Schwingungsdämpfer wird der Fügeprozess von Kabel und Spule von der Dämpfermontage entkoppelt. Dies ist insbesondere bei einem Verlöten von Kabel und Spule von Vorteil, da ein Löten im Bereich von Ölmontageumfängen entfällt. Vielmehr kann die Kopplung von Kabel und Spule vorab im Rahmen einer Sauberraumproduktion erfolgen.

Vorteilhafte Ausgestaltungen der Erfindung sind Gegenstand weiterer Patentansprüche.

Erfindungsgemäß weist der Hülsenabschnitt einen mittleren Bereich auf, in dem das bzw. die Kabel mittels einer Presspassung durch diesen gehalten sind, sowie mindestens einen daran anschließenden Bereich, in dem das bzw. die Kabel mit Spiel zum Innenumfang des Hülsenabschnitts verlaufen. Dies ermöglicht zum einen eine definierte Fixierung des bzw. der Kabel am Gehäuse, gestattet jedoch andererseits den Ausgleich rotatorischer und axialer Toleranzen und Einbaulagen.

In einer weiteren Ausführungsvariante ist das Gehäuse derart konfiguriert, dass eine axiale Reaktionskraft bei der Kopplung des Steckerabschnitts mit dem Kabelbaum über den Kopplungsabschnitt abgestützt wird. Hierdurch ist es möglich, auf Seiten der Kolbenstange auf Befestigungsstrukturen für den Steckerabschnitt der Kontaktierungseinrichtung wie Ringnuten, Absätze und dergleichen zu verzichten. Dementsprechend entfällt der hierfür ansonsten erforderliche Bearbeitungsaufwand. Zudem kann die Kolbenstange gegebenenfalls schlanker und auf jeden Fall stabiler ausgeführt werden, da deren Querschnitt durch entsprechende Befestigungsstrukturen nicht geschwächt wird.

Gemäß einer weiteren Ausführungsvariante sind die Kabel mittels Kabelschuhen an den Steckerabschnitt angeschlossen. Dies gestattet eine einfache Festlegung und erleichtert die elektrische Kontaktierung zum Kabelbaum hin.

Die Befestigung der Kabel an der Spule kann grundsätzlich in beliebiger Art und Weise erfolgen. Vorzugsweise werden die Kabel mit den Polen der Spule zu verlötet und die Verbindungsstellen gegebenenfalls anschließend elektrisch isoliert.

Gemäß einer weiteren Ausführungsvariante kann der Kopplungsabschnitt über eine Rastverbindung an der Spule befestigt werden. Dies ermöglicht eine Anbringung des Gehäuses je nach Bedarf ohne die Verwendung von Zusatzwerkzeug. Die Rastverbindung auf der Spule kann entweder frei drehbar oder aber drehfest ausgeführt werden.

Vorzugsweise besteht das Gehäuse aus Kunststoff, so dass dieses das Gesamtgewicht des Schwingungsdämpfers nicht merklich erhöht. Im Vergleich zu einer Umspritzung des bzw. der Kabel mit Kunststoff bleiben bei der hier vorgestellten Gehäuselösung der Materialaufwand und das Gewicht geringer.

In einer weiteren Ausführungsvariante ist vorgesehen, dass das Gehäuse von der Kolbenseite her in die Kolbenstange einführbar ist. Dies erleichtert die Montage einer aus Kabel, Spule und Gehäuse bestehenden vormontierten Baueinheit.

Die vorstehend erläuterte Kontaktierungseinrichtung lässt sich flexibel für Schwingungsdämpfer mit unterschiedlichen Arten der Kabelbaumkontaktierung einsetzen. Es ergibt sich damit insbesondere ein Schwingungsdämpfer für ein Kraftfahrzeug, umfassend eine Kolbenstange und eine Kontaktierungseinrichtung der vorstehend erläuterten Art, bei dem die Kolbenstange als Hohlrohr ausgebildet ist und das bzw. die Kabel der Kontaktierungseinrichtung innerhalb des Hohlrohrs verlaufen.

In einer vorteilhaften Ausgestaltung des Schwingungsdämpfers ist vorgesehen, dass der Steckerabschnitt der Kontaktierungseinrichtung in der Kolbenstange lediglich radial abgestützt ist, so dass, wie oben bereits erläutert, auf korrespondierende Befestigungsstrukturen auf Seiten der Kolbenstange verzichtet werden kann.

Nachfolgend wird die Erfindung anhand eines in der Zeichnung dargestellten Ausführungsbeispiels näher erläutert. Die Zeichnung zeigt in:

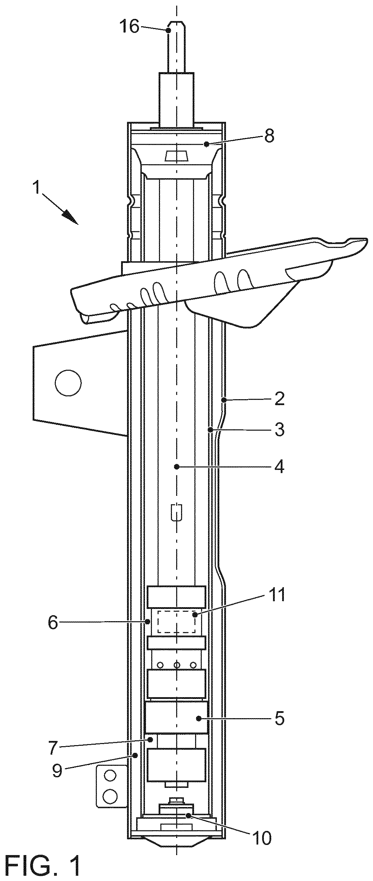

- Figur 1: ein Beispiel für einen Schwingungsdämpfer nach einem Ausführungsbeispiel der Erfindung, und in
- Figur 2: einen Längsschnitt durch die Kontaktierungseinrichtung desselben.

Das in den Figuren dargestellte Ausführungsbeispiel bezieht sich auf einen hydraulischen Schwingungsdämpfer 1, der vorliegend rein beispielhaft als Zweirohrdämpfer für eine Kraftfahrzeugradaufhängung ausgebildet ist.

Der Schwingungsdämpfer 1 umfasst einen vorzugsweise rohrförmig ausgebildeten Behälter 2, in den ein Innenrohr 3 eingesetzt ist. Das Innenrohr 3 ist zylindrisch ausgebildet und an seinem unteren Ende verschlossen. In das Innenrohr 3 erstreckt sich eine Kolbenstange 4 mit einem an der Innenwand des Innenrohrs 3 geführten und gegen diese abdichtenden Kolben 5. Die Kolbenstange 4 ist hierbei als Hohlrohr ausgeführt.

Der Kolben 5 unterteilt einen Arbeitsraum innerhalb des Innenrohrs 3 in eine erste Arbeitskammer 6 und eine zweite Arbeitskammer 7, die jeweils mit einem Dämpfungsmedium wie beispielsweise einem Hydrauliköl gefüllt sind. Zur Begrenzung der oberen ersten Arbeitskammer 6 ist das Innenrohr 3 durch eine Kolbenstangenführung 8 verschlossen, die sich an einem oberen Stirnende des Innenrohrs 3 abstützt. Die Kolbenstangenführung 8 weist eine Öffnung für die Kolbenstange 4 auf. Zudem ist im Bereich der Kolbenstange 4 eine ebenfalls nicht näher dargestellte Gleitdichtung vorgesehen. Die untere zweite Arbeitskammer 7 ist axial durch ein Bodenventil 10 verschlossen, das an einen unteren Endabschnitt des Innenrohrs 3 angesetzt ist, wodurch sich eine besonders schlanke Bauweise ergibt. Zwischen der Innenwand des Behälters 2 und der Außenwand des Innenrohrs 3 wird eine Ausgleichskammer 9 gebildet, welche über das Bodenventil 10 mit der zweiten Arbeitskammer 7 in Verbindung steht.

Weiterhin umfasst der Schwingungsdämpfer 1 zwischen den Arbeitskammern 6 und 7 angeordnete Ventile, welche an der Kolbenstange 4 und/oder dem Kolben 5 angebracht sind und über deren Öffnungsverhalten in Verbindung mit dem Bodenventil 10 die Charakteristik des hydraulischen Schwingungsdämpfers 1 in der Zug- und Druckstufe vorgegeben wird. Über ein elektrisch ansteuerbares Ventil 11, beispielsweise ein Schalt- und/oder Regelventil, kann das Strömungsverhalten des Dämpfungsmediums in dem Behälter 2 gezielt eingestellt werden. Das elektrisch ansteuerbare Ventil 11 kann beispielsweise für eine Druck- und/oder Volumenstromregelung eingesetzt werden. Es kann beispielsweise als Proportionalmagnetventil ausgeführt sein.

Anstelle des Bodenventils 10 kann ein entsprechendes Ventil auch an anderer Stelle zwischen mindestens einer der Arbeitskammern 6, 7 und der Ausgleichskammer 9 vorgesehen sein. Unter Zugstufe wird vorliegend ein Zustand verstanden, bei dem die Kolbenstange 4 mit dem Kolben 5 in Richtung aus dem Innenrohr 3 heraus bewegt wird. Hierbei steigt der Druck in der ersten Arbeitskammer 6 an, während der Druck in der zweiten Arbeitskammer 7 abfällt. Die Druckstufe ist hingegen durch ein Einschieben der Kolbenstange 4 in das Innenrohr 3 mit umgekehrten Druckverhältnissen gekennzeichnet.

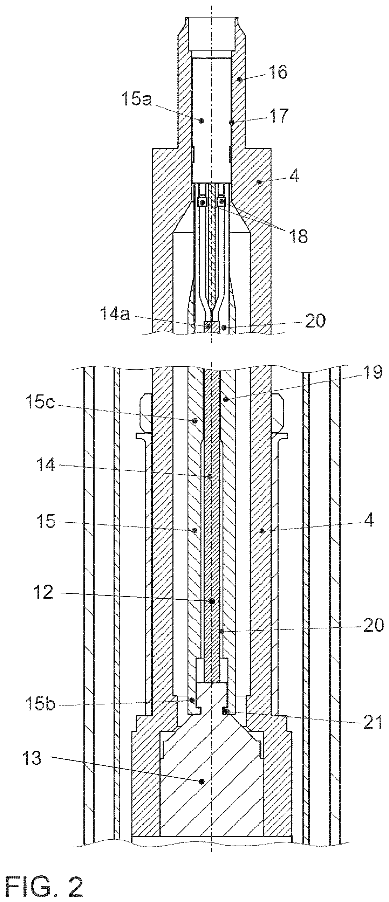

Das elektrisch ansteuerbare Ventil 11 wird über eine Kontaktierungseinrichtung 12 aus dem Fahrzeugbordnetz mit Strom versorgt. Diese Kontaktierungseinrichtung 12 soll nun anhand von Figur 2 näher erläutert werden, wobei zu betonen ist, dass das Ausführungsbeispiel lediglich dazu dient, die Ausführbarkeit der Erfindung anhand möglicher Varianten aufzuzeigen.

Die Kontaktierungseinrichtung 12 umfasst als Komponenten eine elektrische Spule 13, ein oder mehrere elektrische Kabel 14 sowie ein Gehäuse 15.

Die elektrische Spule 13 ist Bestandteil des elektrisch ansteuerbaren Ventils 11 und dementsprechend an diesem angeordnet.

Die elektrischen Kabel 14 sind an die Pole der elektrischen Spule 13 angeschlossen und erstrecken sich von der elektrischen Spule 13 durch die Kolbenstange 4 hindurch zu einem aufbauseitigen Endabschnitt 16 der Kolbenstange 4.

Das Gehäuse 15 hülsenförmig ausgebildet und umfasst mehrere Abschnitte, nämlich einen Steckerabschnitt 15a zur mechanischen und elektrischen Kopplung mit einem Kabelbaum des Kraftfahrzeugs, einen Kopplungsabschnitt 15b zur Befestigung an der Spule 13 und einen diese beiden Abschnitte 15a und 15b verbindenden Hülsenabschnitt 15c zur Hindurchführung des bzw. der Kabel 14.

Das Gehäuse 15 ist dabei derart konfiguriert, dass eine axiale Reaktionskraft bei der Kopplung des Kabelbaums mit dem Steckerabschnitt 15a über den Kopplungsabschnitt 15b abgestützt wird. Hierzu ist das Gehäuse 15 in Axialrichtung hinreichend steif ausgebildet. Mit anderen Worten, die benötigte Axialsteifigkeit wird vorliegend durch das Gehäuse 15 bereitgestellt, so dass innerhalb des Gehäuses flexible Kabel 14 eingesetzt werden können. Eine an die Kabel 14 angespritzte Ummantelung wird vorliegend nicht als Gehäuse 15 angesehen.

Der Steckerabschnitt 15a der Kontaktierungseinrichtung 12 braucht hierdurch in der Kolbenstange 4 lediglich radial abgestützt zu werden. Dies ermöglicht es, an dem freien Endabschnitt 16 der Kolbenstange 4 auf korrespondierende Befestigungsstrukturen für den Steckerabschnitt 15a zu verzichten. Wie Figur 2 entnommen werden kann, ist im Bereich des Steckerabschnitts 15a an der Kolbenstange 4 lediglich eine einfache Durchgangsbohrung 17 mit konstantem Querschnitt ohne Nuten oder Absätze vorgesehen.

Der Steckerabschnitt 15a kann mit nicht näher dargestellten Rasteinrichtungen versehen sein, welche eine mechanische Festlegung eines am Kabelbaum vorgesehenen korrespondierenden Steckers gestatten. Gleichzeitig erfolgt über diese Steckverbindung der elektrische Anschluss an das Fahrzeugbordnetz, um eine Ansteuerung des elektrisch ansteuerbaren Ventils 11 zu ermöglichen.

An dem Steckerabschnitt 15a können weiterhin Kabelschuhe 18 angeordnet sein, über welche die elektrischen Kabel 14 an den Steckerabschnitt angeschlossen sind. Jedoch ist auch eine andere Art und Weise der Festlegung möglich, welche eine elektrische Kontaktierung zum korrespondierenden Stecker des Kabelbaums gestattet.

Die Kabel 14 können, wie in Figur 2 dargestellt, mit einer gemeinsamen Isolierung 14a versehen sein. Es ist jedoch auch möglich, zwei separat isolierte Kabel 14 zu verwenden. Ferner ist es möglich, bei Lösungen, bei welchen ein Pol der elektrischen Spule 13 anderweitig elektrisch angeschlossen ist, ein lediglich einadriges Kabel durch die Kolbenstange 4 hindurchzuführen.

An den Steckerabschnitt 15a schließt der bereits erwähnte Hülsenabschnitt 15c an. Dieser Hülsenabschnitt 15c kann in einem mittleren Bereich 19 so ausgeführt sein, dass die Kabel 14 mittels einer Presspassung in dem Hülsenabschnitt 15c gehalten sind. In mindestens einem hieran anschließenden Bereich 20, vorzugsweise beidseits des mittleren Bereichs 19, verlaufen die Kabel 14 mit Radialspiel zum Innenumfang des Hülsenabschnitts 15b. Hierdurch ist es möglich, rotatorisch und längentechnisch Toleranzen und Einbaulagen auszugleichen.

An den Hülsenabschnitt 15c schließt wiederum der Kopplungsabschnitt 15b an, über welchen das Gehäuse 15 an der elektrischen Spule 13 befestigt ist.

Die Anbindung kann hierbei vorzugsweise über eine Rastverbindung 21 erfolgen. Dies ermöglicht es, das Gehäuse 15 bei Bedarf an der Zusammenbaueinheit aus elektrischer Spule 13 und Kabel 14 zu befestigen, ohne dass hierfür ein Zusatzwerkzeug benötigt wird. Bei Kabelbaumkontaktierung, bei welchen das bzw. die Kabel 14 aus dem Endabschnitt 16 der Kolbenstange 4 herausgeführt werden muss bzw. müssen, kann das Gehäuse 15 einfach weggelassen werden. Hierdurch ist es möglich, an die gleiche Zusammenbaueinheit aus elektrischer Spule 13 und Kabel 14 sowohl bei Kabelbaumkontaktierung mit in der Kolbenstange 4 liegender Steckverbindung als auch bei Kabelbaumkontaktierung mit aus der Kolbenstange 4 herausgeführtem Kabel 14 einzusetzen.

Es ist jedoch grundsätzlich auch möglich, anstelle einer Rastverbindung 21, welche gegebenenfalls auch wieder lösbar ausgeführt sein kann, eine andere Art und Weise der Verbindung zwischen der elektrischen Spule 13 und dem bzw. den Kabeln 14 vorzusehen.

Die Verbindung zwischen der elektrischen Spule 13 und dem Gehäuse 15 kann entweder drehbar ausgeführt werden, beispielsweise um unterschiedliche Einbaulagen auszugleichen, oder aber drehfest ausgeführt werden, um gegebenenfalls eine höhere Steifigkeit der Anbindung im Hinblick auf die Aufnahme von axialen Reaktionskräften beim Einstecken des Kabelbaums zu erzielen.

Das bzw. die Kabel 14 können grundsätzlich in beliebiger Art und Weise an der elektrischen Spule 13 befestigt werden. Vorzugsweise sind diese mit den Polen der elektrischen Spule 13 verlötet. Ein solches Verlöten kann vor der Montage der Zusammenbaueinheit aus elektrischer Spule 13 und Kabeln 14 am Schwingungsdämpfer, d.h. außerhalb des Schwingungsdämpfers 1 in einer Sauberraumumgebung erfolgen. Der Lötprozess kann hierdurch von der Dämpfermontage entkoppelt werden.

Vorzugsweise ist das Gehäuse 15 aus Kunststoff gefertigt, so dass dieses ein geringes Bauteilgewicht aufweist. Dabei sind die oben genannten Abschnitte desselben, d.h. der Steckerabschnitt 15a, der Kopplungsabschnitt 15b und der Verbindungsabschnitt 15c in das Gehäuse 15 integriert, welches in einem Stück als Integralbauteil hergestellt werden kann.

Zusammengefasst ergeben sich die folgenden Vorteile. Die Befestigung der Kabel 14 an der elektrischen Spule 13 ist von der Dämpfermontage entkoppelt. Dies bietet Vorteile im Hinblick auf den Ablauf der Fertigung. Erfolgt die Befestigung durch Löten, wird ein solches im Bereich von Ölmontageumfängen vermieden. Weiterhin können die elektrische Spule 13 und Kabel 14 als Zusammenbaueinheit bereitgestellt werden, so dass Varianten bei der Kabelanlieferung entfallen können. Gleichwohl ermöglicht die erfindungsgemäße Lösung den Einsatz für unterschiedliche Arten der Kabelbaumanbindung. Überdies ist es möglich, die Fertigung der Kolbenstange 4 durch Vermeidung von Befestigungsstrukturen für einen Steckerabschnitt 15a auf Seiten der Kontaktierungseinrichtung 12 zu vereinfachen. Durch den Einsatz eines Gehäuses 15 wird im Vergleich zu kunststoffumspritzten elektrischen Leitern eine Material- und Gewichtseinsparung erzielt. Weiterhin zeichnet sich die erfindungsgemäße Lösung durch eine einfache Montage aus. Kommen zur Festlegung der Kabel 14 am Steckerabschnitt 15 Kabelschuhe 18 zum Einsatz, lassen sich kostengünstige Standardbauteile verwenden, welche beispielsweise eine Kabelbefestigung durch Crimpen gestatten.

Im Hinblick auf den Verbau an einem Kraftfahrzeug können durch die erfindungsgemäße Lösung gleiche elektrisch ansteuerbare Ventile für Schwingungsdämpfer an der Vorder- und Hinterachse eingesetzt werden.

Die Erfindung wurde vorstehend anhand eines Ausführungsbeispiels und weiterer Abwandlungen näher erläutert. Insbesondere können technische Einzelmerkmale, welche oben im Kontext weiter Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist ausdrücklich nicht auf das beschriebene Ausführungsbeispiel beschränkt, sondern umfasst alle durch die Patentansprüche definierten Ausgestaltungen.

### Bezugszeichenliste

- 1: hydraulischer Schwingungsdämpfer
- 2: Behälter
- 3: Innenrohr
- 4: Kolbenstange
- 5: Kolben
- 6: erste Arbeitskammer
- 7: zweite Arbeitskammer
- 8: Kolbenstangenführung
- 9: Ausgleichsraum
- 10: Bodenventil
- 11: elektrisch ansteuerbares Ventil
- 12: Kontaktierungseinrichtung
- 13: elektrische Spule
- 14: Kabel, elektrisch
- 14a: Isolierung
- 15: Gehäuse
- 15a: Steckerabschnitt
- 15b: Kopplungsabschnitt
- 15c: Hülsenabschnitt
- 16: Endabschnitt der Kolbenstange
- 17: Durchgangsbohrung
- 18: Kabelschuh
- 19: mittlerer Bereich mit Presspassung
- 20: Bereich mit Spielpassung
- 21: Rastverbindung

## Patentansprüche

1. Kontaktierungseinrichtung (12) für ein innerhalb eines Schwingungsdämpfers (1) angeordnetes elektrisch ansteuerbares Ventil (11), umfassend
eine elektrische Spule (13) zur Anordnung an dem elektrisch ansteuerbaren Ventil (11), ein oder mehrere elektrische Kabel (14) zur Anordnung innerhalb einer Kolbenstange (4) des Schwingungsdämpfers (1), welche an die Pole der elektrischen Spule (13) angeschlossen sind, und
ein hülsenförmig ausgebildetes Gehäuse (15) zur Anordnung in der Kolbenstange (4), das einen Steckerabschnitt (15a) zur mechanischen und elektrischen Kopplung mit einem Kabelbaum, einen Kopplungsabschnitt (15b) zur Befestigung an der elektrischen Spule (13) und einen diese beiden Abschnitte (15a, 15b) verbindenden Hülsenabschnitt (15c) zur Hindurchführung des mindestens einen Kabels (14) ausbildet,
wobei der Hülsenabschnitt (15c) einen mittleren Bereich (19) aufweist, in dem das mindestens eine Kabel (14) mittels einer Presspassung durch diesen gehalten ist, und mindestens einen daran anschließenden Bereich (20), in dem das mindestens eine Kabel (14) mit Spiel zum Innenumfang des Hülsenabschnitts (15c) verläuft.

2. Kontaktierungseinrichtung (12) nach Anspruch 1, **dadurch gekennzeichnet, dass** das Gehäuse (15) derart konfiguriert ist, dass eine axiale Reaktionskraft bei der Kopplung des Steckerabschnitts (15a) mit dem Kabelbaum über den Kopplungsabschnitt (15b) abgestützt wird.

3. Kontaktierungseinrichtung (12) nach Anspruch 1 oder 2, **dadurch gekennzeichnet, dass** das bzw. die Kabel (14) jeweils mittels eines Kabelschuhs (18) an den Steckerabschnitt (15a) angeschlossen ist bzw. sind.

4. Kontaktierungseinrichtung (12) nach einem der Ansprüche 1 bis 3, **dadurch gekennzeichnet, dass** das bzw. die Kabel (14) jeweils mit einem Pol der elektrischen Spule (13) verlötet ist bzw. sind.

5. Kontaktierungseinrichtung (12) nach einem der Ansprüche 1 bis 4, **dadurch gekennzeichnet, dass** der Kopplungsabschnitt (15b) über eine Rastverbindung (21) an der elektrischen Spule (13) befestigt ist.

6. Kontaktierungseinrichtung (12) nach einem der Ansprüche 1 bis 5, **dadurch gekennzeichnet, dass** das Gehäuse (15) aus Kunststoff besteht.

7. Kontaktierungseinrichtung (12) nach einem der Ansprüche 1 bis 6, **dadurch gekennzeichnet, dass** das Gehäuse (15) von der Kolbenseite her in die Kolbenstange (4) einführbar ist.

8. Schwingungsdämpfer (1) für ein Kraftfahrzeug, umfassend eine Kolbenstange (4) und eine Kontaktierungseinrichtung (12) nach einem der vorgenannten Ansprüche, **dadurch gekennzeichnet, dass** die Kolbenstange (4) als Hohlrohr ausgebildet ist und das mindestens eine Kabel (14) der Kontaktierungseinrichtung (12) innerhalb des Hohlrohrs verläuft.

9. Schwingungsdämpfer nach Anspruch 8, **dadurch gekennzeichnet, dass** der Steckerabschnitt (15a) der Kontaktierungseinrichtung (12) in der Kolbenstange (4) lediglich radial abgestützt ist.

## Claims

1. Contacting device (12) for an electrically actuatable valve (11) which is arranged within a vibration damper (1), comprising
an electrical coil (13) for arrangement on the electrically actuatable valve (11),
one or more electrical cables (14) for arrangement within a piston rod (4) of the vibration damper (1), which one or more electrical cables are connected to the poles of the electrical coil (13), and
a housing (15) for arrangement in the piston rod (4), which housing is of sleeve-shaped form and forms a plug portion (15a) for mechanical and electrical coupling to a wiring harness, a coupling portion (15b) for fastening to the electrical coil (13) and a sleeve portion (15c), connecting these two portions (15a, 15b), for lead-through of the at least one cable (14),
wherein the sleeve portion (15c) has a central region (19), in which the at least one cable (14) is held thereby by means of a press fit, and at least one adjoining region (20), in which the at least one cable (14) runs with play with respect to the inner circumference of the sleeve portion (15c).

2. Contacting device (12) according to Claim 1, **characterized in that** the housing (15) is configured in such a way that an axial reaction force when the plug portion (15a) is coupled to the wiring harness is supported via the coupling portion (15b).

3. Contacting device (12) according to Claim 1 or 2, **characterized in that** the cable (s) (14) is/are in each case connected to the plug portion (15a) by means of a cable shoe (18).

4. Contacting device (12) according to one of Claims 1 to 3, **characterized in that** the cable (s) (14) is/are in each case soldered to a pole of the electrical coil (13).

5. Contacting device (12) according to one of Claims 1 to 4, **characterized in that** the coupling portion (15b) is fastened to the electrical coil (13) via a latching connecting (21).

6. Contacting device (12) according to one of Claims 1 to 5, **characterized in that** the housing (15) consists of plastic.

7. Contacting device (12) according to one of Claims 1 to 6, **characterized in that** the housing (15) can be introduced into the piston rod (4) from the piston side.

8. Vibration damper (1) for a motor vehicle, comprising a piston rod (4) and a contacting device (12) according to one of the preceding claims, **characterized in that** the piston rod (4) is in the form of a hollow tube, and the at least one cable (14) of the contacting device (12) runs within the hollow tube.

9. Vibration damper according to Claim 8, **characterized in that** the plug portion (15a) of the contacting device (12) is supported merely radially in the piston rod (4).

## Revendications

1. Dispositif de contact (12) destiné à une soupape à commande électrique (11) disposée à l'intérieur d'un amortisseur de vibrations (1), ledit dispositif de contact comprenant
une bobine électrique (13) destinée à être disposée au niveau de la soupape à commande électrique (11),
un ou plusieurs câbles électriques (14) qui sont destinés à être disposés à l'intérieur d'une tige de piston (4) de l'amortisseur de vibrations (1) et qui sont reliés aux pôles de la bobine électrique (13) et
un boîtier (15) en forme de manchon qui est destiné à être disposé dans la tige de piston (4) et qui forme une portion de connecteur (15a) destinée à être accouplée mécaniquement et électriquement à un faisceau de câbles, une portion d'accouplement (15b) destinée à être fixée à la bobine électrique (13) et une portion formant manchon (15c) qui relie ces deux portions (15a, 15b) et qui est traversée par l'au moins un câble (14),
la portion formant manchon (15c) comportant une zone centrale (19) dans laquelle l'au moins un câble (14) est maintenu à travers celle-ci par ajustement serré, et au moins une zone attenante (20) dans laquelle l'au moins un câble (14) s'étend avec jeu en direction de la périphérie intérieure de la portion formant manchon (15c) .

2. Dispositif de contact (12) selon la revendication 1, **caractérisé en ce que** le boîtier (15) est conçu pour supporter une force de réaction axiale lors de l'accouplement de la portion de connecteur (15a) au faisceau de câbles par le biais de la portion d'accouplement (15b).

3. Dispositif de contact (12) selon la revendication 1 ou 2, **caractérisé en ce que** le ou les câbles (14) sont raccordés à la portion de connecteur (15a) à chaque fois au moyen d'une cosse de câble (18).

4. Dispositif de contact (12) selon l'une des revendications 1 à 3, **caractérisé en ce que** le ou les câbles (14) sont soudés chacun à un pôle de la bobine électrique (13).

5. Dispositif de contact (12) selon l'une des revendications 1 à 4, **caractérisé en ce que** la portion d'accouplement (15b) est fixée à la bobine électrique (13) par le biais d'une liaison à encliquetage (21).

6. Dispositif de contact (12) selon l'une des revendications 1 à 5, **caractérisé en ce que** le boîtier (15) est en matière synthétique.

7. Dispositif de contact (12) selon l'une des revendications 1 à 6, **caractérisé en ce que** le boîtier (15) peut être inséré dans la tige de piston (4) depuis le côté piston.

8. Amortisseur de vibrations (1) destiné à un véhicule automobile et comprenant une tige de piston (4) et un dispositif de contact (12) selon l'une des revendications précédentes, **caractérisé en ce que** la tige de piston (4) est réalisée sous la forme d'un tube creux et l'au moins un câble (14) du dispositif de contact (12) s'étend à l'intérieur du tube creux.

9. Amortisseur de vibrations selon la revendication 8, **caractérisé en ce que** la portion de connecteur (15a) du dispositif de contact (12) est supportée uniquement radialement dans la tige de piston (4).
